# FASCICULE DE BREVET EUROPEEN

(11) **EP 3 435 500 B1**
(45) Date de publication et mention de la délivrance du brevet: **29.04.2026**
(21) Numéro de dépôt: 18184657.7
(22) Date de dépôt: 20.07.2018
(51) Int. Cl.: H02G 3/04

(54) **CHEMIN DE CÂBLES À ORIFICES D'ATTACHE**
KABELKANAL MIT BEFESTIGUNGSÖSEN
CABLE PATH WITH FASTENER HOLES

(30) Priorité: 24.07.2017 FR 1757006
(43) Date de publication de la demande: 30.01.2019
(73) Titulaire: ALSTOM Holdings, 93400 Saint-Ouen-sur-Seine (FR)
(72) Inventeur: MIFSUD, Marc, 78620 L'Étang la Ville (FR); PUEL, Bernard, 65310 Laloubère (FR); PEREZ, Xavier, 08970 Sant Joan Despi (ES); BAUER, Patrick, 67330 Zutzendorf (FR); MEILHAN, Alexandre, 92700 Colombes (FR)
(74) Mandataire: Plasseraud IP

(56) Documents cités:
- EP-A1- 0 813 012
- EP-A1- 1 798 829
- EP-A1- 2 672 592
- WO-A2-2009/112754
- US-A- 4 957 251
- US-A1- 2006 171 651
- US-A1- 2012 152 588
- US-A1- 2014 021 310

## Description

La présente invention concerne un chemin de câbles.

L'invention concerne également un ensemble et un véhicule ferroviaire comprenant au moins un chemin de câbles.

Un tel chemin de câbles est employé notamment pour supporter plusieurs câbles traversant un environnement intérieur ou extérieur et pour les maintenir proches d'une paroi. Ceci permet d'éviter que les câbles ne pendent ou ne se déplacent et ne s'abiment.

L'emploi d'un tel chemin de câbles améliore ainsi la durabilité des câbles supportés et la sécurité de l'environnement. De plus, l'aspect esthétique de l'environnement s'en trouve nettement amélioré.

Ceci est particulièrement désirable dans le cas d'un véhicule ferroviaire, où les nombreux systèmes électriques et électroniques embarqués nécessitent un grand nombre de câbles cheminant depuis les motrices à travers les voitures.

Afin de fixer efficacement les câbles au chemin de câbles, il est connu d'utiliser des trous oblongs dans la structure du chemin, et d'attacher les câbles au moyen de colliers de serrage passant par les trous oblongs.

Les trous oblongs servent également à recevoir des vis de fixation d'un ou plusieurs séparateurs, qui sont utilisés pour séparer différentes catégories de câbles, comme par exemple des câbles de puissance et des câbles basses tensions.

Des exemples de chemins de câbles sont décrits dans les documents EP 2672592 A1, EP 1798829 A1, US 2012/152588 A1, WO 2009/112754 A2 et EP 0813012 A1.

Ces chemins de câbles ne donnent cependant pas entière satisfaction. En effet la fixation de câbles sur le chemin par des colliers de serrage passant chacun par deux trous oblongs nécessite que l'opérateur accède aux deux faces opposées du chemin, ce qui rend l'opération fastidieuse.

Ainsi, un but de l'invention est de fournir un chemin de câbles permettant une fixation plus rapide et efficace des câbles, tout en conservant l'ensemble des fonctionnalités actuelles.

A cet effet, l'invention concerne un chemin de câbles selon la revendication 1.

Selon des modes de réalisation particuliers, le chemin de câbles selon l'invention comprend l'une ou plusieurs des caractéristiques des revendications 2 à 3, prise(s) isolément ou selon toute combinaison techniquement réalisable.

L'invention a de plus pour objet un ensemble selon la revendication 4.

Selon un mode de réalisation particulier, l'ensemble selon l'invention comprend la caractéristique de la revendication 5.

L'invention a également pour objet un véhicule ferroviaire selon la revendication 6.

L'invention a en outre pour objet un procédé d'attache selon la revendication 7.

L'invention sera mieux comprise à la lecture de la description qui va suivre, donnée uniquement à titre d'exemple et faite en référence aux dessins annexés, parmi lesquels :
- la figure 1 est une vue en perspective partielle d'un chemin de câbles selon l'invention ;
- la figure 2 est une vue de dessus d'un orifice d'attache du chemin de câbles de la figure 1 ;
- la figure 3 est une vue de dessus d'un câble attaché à l'orifice d'attache de la figure 2 ;
- la figure 4 est une vue en coupe transversale du chemin de câbles de la figure 1 recevant des câbles et un séparateur, et
- la figure 5 est une vue en perspective d'une variante de chemin de câbles selon l'invention.

Dans ce qui suit, on considère que les expressions « sensiblement parallèle » et « sensiblement perpendiculaire » signifient respectivement parallèle et perpendiculaire à 10° près.

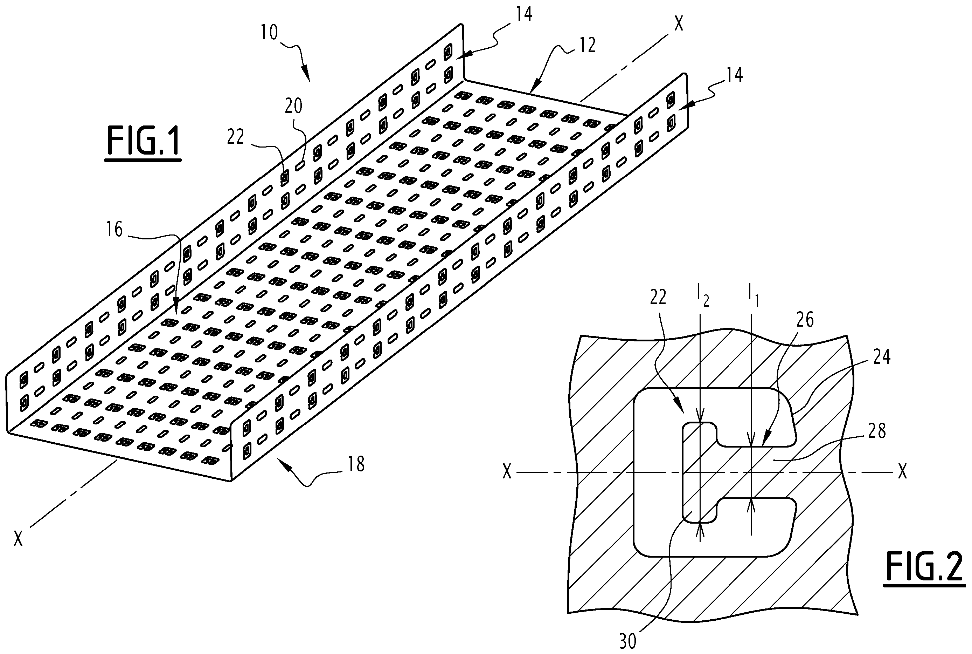

Un chemin de câbles 10 selon l'invention est représenté en partie sur la figure 1. Le chemin de câbles 10 s'étend selon une direction principale X-X, et comprend une face inférieure 12 et deux faces latérales 14.

Chacune de la face inférieure 12 et des faces latérales 14 présente une forme rectangulaire, avantageusement allongée dans le sens de la direction principale X-X.

Les faces latérales 14 s'étendent dans des plans parallèles entre eux, et sensiblement orthogonaux à un plan dans lequel s'étend la face inférieure 12. Les faces latérales 14 sont liées par un bord respectif à des bords opposés de la face inférieure 12.

La face inférieure 12 et les faces latérales 14 sont arrangées de façon à ce que le chemin de câbles 10 présente une section en U dans un plan orthogonal à la direction principale X-X.

Selon un mode de réalisation, la face inférieure 12 et les faces latérales 14 sont formées à partir d'une même tôle pliée à angle droit.

En variante, les faces latérales 14 sont assemblées à la face intérieure 12 par soudage.

La face inférieure 12 et les faces latérales 14 définissent un côté intérieur 16 du chemin de câbles 10, et un côté extérieur 18, comme représenté sur la figure 1. Le côté intérieur 16 est destiné à recevoir des câbles s'étendant de manière sensiblement parallèle à la direction principale X-X.

Le chemin de câbles 10 présente une pluralité d'orifices oblongs 20 et une pluralité d'orifices d'attache 22. Les orifices oblongs 20 et les orifices d'attache 22 sont traversant et débouchent sur le côté intérieur 16 et sur le côté extérieur 18.

Chacune de la face inférieure 12 et des faces latérales 14 présente à la fois au moins un des orifices oblongs 20 et au moins un des orifices d'attache 22.

Chaque orifice oblong 20 s'étend selon une direction parallèle à la direction principale X-X. Les orifices oblongs 20 sont arrangés selon des lignes orthogonales à la direction principale.

De même, les orifices d'attache 22 sont arrangés selon des lignes orthogonales à la direction principale.

Selon l'invention, les lignes d'orifices oblongs 20 et les lignes d'orifices d'attache 22 sont alternées selon la direction principale X-X, comme représenté sur la figure 1.

Chaque orifice d'attache 22, comme représenté sur la figure 2, présente au moins un bord 24, ainsi qu'une languette 26 faisant saillie depuis le bord 24 et s'étendant dans le plan du ou des bords 24 de l'orifice d'attache 22, par exemple selon une direction sensiblement parallèle à la direction principale X-X

La languette 26 comprend une première partie 28 proximale par rapport au bord 24, et une deuxième partie 30 distale.

Avantageusement, la deuxième partie 30 présente une largeur l₂, selon une direction sensiblement orthogonale à la languette 26, plus importante qu'une largeur l₁ de la première partie 28.

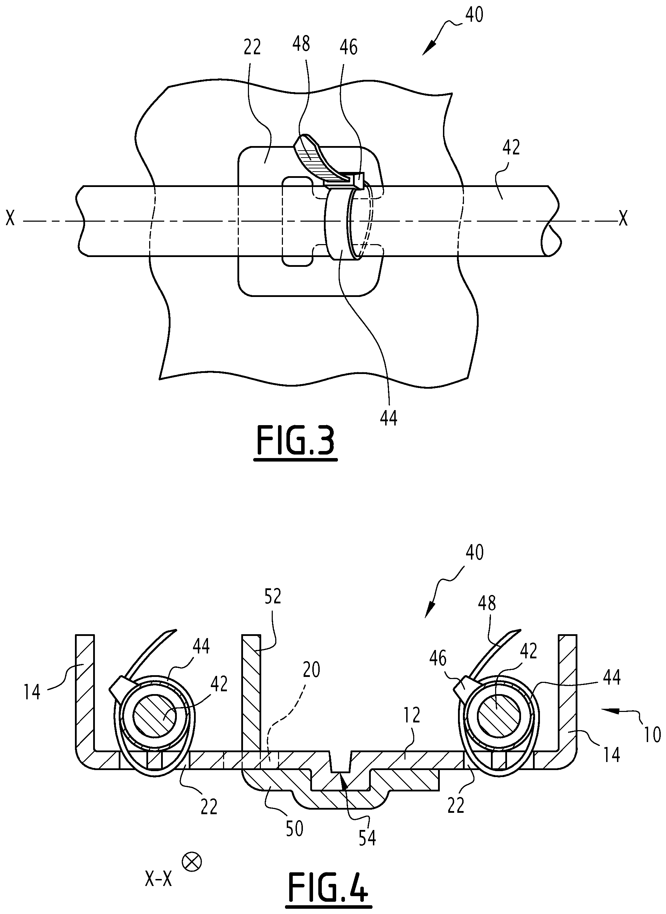

Un ensemble 40 est représenté sur les figures 3 et 4, comportant un chemin de câbles 10 tel que précédemment décrit ainsi qu'au moins un câble 42 et au moins un collier de serrage 44.

Le collier de serrage 44 comporte une tête 46 et une bande 48 reliée à la tête 46 par une première extrémité. La bande 48 est adaptée pour être engagée dans une ouverture de la tête 46 par son extrémité libre, de manière non réversible.

Le collier de serrage 44 entoure étroitement le câble 42 et la première partie 28 de la languette 26 d'un des orifices d'attache 22.

La deuxième partie 30 de la languette 26 est plus large que la première partie 28, de sorte que le collier de serrage 44 est limité et, de préférence, bloqué dans ses mouvements en translation selon la direction principale X-X par la deuxième partie 30. Autrement dit, la deuxième partie 30 forme une butée pour le collier de serrage 44 limitant une translation du collier de serrage 44 le long de la première partie 28.

Selon un mode de réalisation représenté figure 4, l'ensemble 40 comprend au moins un séparateur 50 fixé au chemin de câbles 10.

Le séparateur 50 est une tôle comprenant des pattes 52 faisant saillie à angle droit. Chaque patte 52 est glissée dans un trou oblong 20 de la face inférieure 12. Le séparateur 50 est fixé à la face inférieure 12, du côté extérieur 18, par exemple par clinchage, c'est-à-dire par emboutissage du séparateur 50 et de la face inférieure 12 sur une zone de contact 54.

Le séparateur 50 est utilisé afin de séparer les câbles 42 fixés au chemin de câbles 10 selon une direction orthogonale à la direction principale X-X, par exemple pour séparer des câbles de puissance électrique et des câbles basse tension.

L'ensemble 40 est par exemple destiné à être fixé à une paroi d'un véhicule ferroviaire de sorte que le chemin de câbles 10 maintient les câbles 42 proches de la paroi. Ceci permet notamment de faire cheminer les câbles 42 transmettant une puissance électrique ou des informations à travers les voitures d'un train, et de les maintenir contre les parois des voitures, par exemple pour les protéger et réduire les risques qu'ils peuvent représenter, ou bien pour les cacher avec des éléments de parement.

L'utilisation du chemin de câbles 10 se déduit de sa structure, et va maintenant être brièvement décrite.

Un utilisateur fixe un câble 42 au chemin de câbles 10 en plaçant un collier de serrage 44 autour du câble 42, puis serre le collier de serrage 44 autour de la première partie 28 de la languette 26, le placement et le serrage du collier de serrage 44 étant effectués entièrement depuis le côté intérieur 16.

Grâce aux caractéristiques décrites ci-dessus, le chemin de câbles 10 permet une fixation plus rapide et efficace des câbles 42, tout en conservant l'ensemble des fonctionnalités existant précédemment.

Le chemin de câbles 10 comprend des rangées d'orifices d'attache 22 présentant une languette 26, qui permettent de fixer facilement un câble 42 à partir d'un seul côté du chemin de câbles 10. Ceci permet à un unique utilisateur de fixer un câble 42 sans avoir à contourner le chemin de câbles 10, simplifiant et accélérant le procédé.

En effet, un chemin de câbles ne comportant que des orifices oblongs 20 requiert de passer le collier de serrage 44 par deux orifices oblongs 20 voisins, ce qui nécessite que l'utilisateur accède aux côté intérieur 16 et au côté extérieur 18.

Ceci facilite grandement l'installation de câbles 42 sur le chemin de câbles 10, qui peut requérir la mise en place de nombreux colliers de serrage 44.

Le chemin de câbles 10 est avantageux, puisque les orifices d'attache 22 présentent une languette 26 comportant une deuxième partie 30 plus large que la première partie 28, ce qui permet un blocage efficace du collier de serrage 44.

Le chemin de câbles 10 comprend également des orifices oblongs 20 arrangés selon des lignes orthogonales à la direction principale X-X, ce qui permet une installation rapide et modulable du séparateur 50.

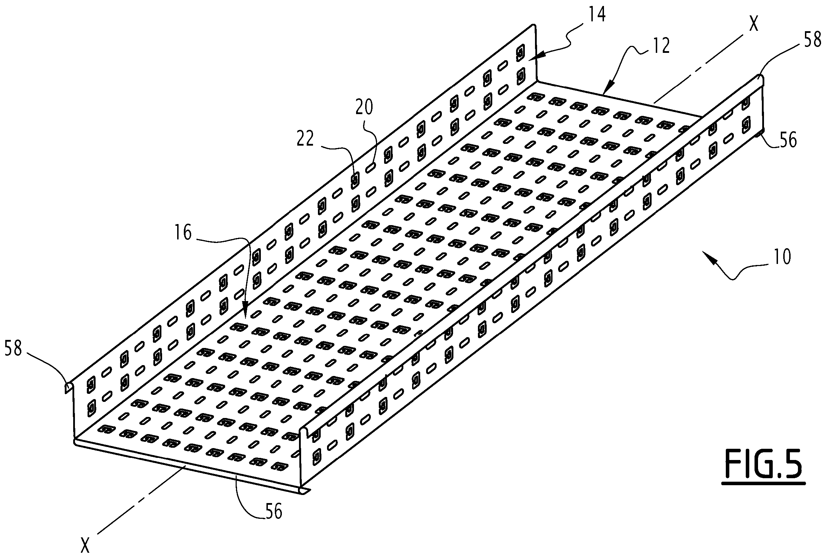

Selon une variante représentée sur la figure 5, chaque bord de la face inférieure 12 transverse à la direction principale X-X présente un pli d'extrémité 56, réalisé en repliant le matériau du bord d'extrémité de la face inférieure 12 vers le côté extérieur 18. De même, chaque bord supérieur des faces latérales 14 présente un pli longitudinal 58 réalisé en repliant le matériau du bord supérieur de la face inférieure 12 vers le côté extérieur 18. Les plis d'extrémité 56 et les plis longitudinaux 58 permettent de protéger les gaines d'isolation des câbles 52 qui s'étendent au-delà du chemin de câbles 10, pardessus les bords d'extrémité ou les bords supérieurs, les bords pouvant sinon présenter des arêtes tranchantes.

## Revendications

1. Chemin de câbles (10) s'étendant selon une direction principale (X-X), présentant des orifices d'attache (22), chaque orifice d'attache (22) présentant au moins un bord (24) ainsi qu'une languette (26) faisant saillie depuis le bord (24) et comprenant une première partie (28) proximale par rapport au bord (24) et une deuxième partie (30) distale, le chemin de câbles (10) présentant également des orifices oblongs (20), le chemin de câbles (10) comprenant une face inférieure (12) et deux faces latérales (14), arrangées de façon à ce que le chemin de câbles (10) présente une section en U dans un plan orthogonal à la direction principale (X-X), **caractérisé en ce que** chacune de la face inférieure (12) et des faces latérales (14) présente à la fois au moins un des orifices oblongs (20) et au moins un des orifices d'attache (22), les orifices d'attache (22) et les orifices oblongs (20) étant arrangés de façon à former des lignes alternées, les lignes d'orifices d'attache (22) et les lignes d'orifices oblongs (20) étant arrangées selon des lignes orthogonales à la direction principale (X-X).

2. Chemin de câbles (10) selon la revendication 1, dans lequel la deuxième partie (30) présente une largeur (l₂), selon une direction sensiblement orthogonale à la languette (26), plus importante qu'une largeur (l₁) de la première partie (28).

3. Chemin de câbles (10) selon la revendication 1 ou 2, dans lequel chaque languette (26) s'étend dans le plan du ou des bords (24) de l'orifice d'attache (22).

4. Ensemble (40) comprenant un chemin de câbles (10) selon l'une quelconque des revendications précédentes, au moins un câble (42) s'étendant sur le chemin de câble (10), et au moins un collier de serrage (44) fixant le câble (42) au chemin de câbles (10), le collier de serrage (44) entourant le câble (42) et la première partie (28) de la languette (26) d'un des orifices d'attache (22), la deuxième partie (30) formant de préférence une butée pour le collier de serrage (44) limitant une translation du collier de serrage (44) le long de la première partie (28).

5. Ensemble (40) selon la revendication 4, dans lequel l'ensemble (40) comprend au moins deux câbles (42) et au moins un séparateur (50), le chemin de câbles (10) présentant des orifices oblongs (20), le séparateur (50) étant fixé au chemin de câble (10) à travers au moins un orifice oblong (20), le séparateur (50) séparant les câbles (42).

6. Véhicule ferroviaire comprenant au moins un ensemble (40) selon l'une quelconque des revendications 4 et 5, l'ensemble (40) étant fixé à une paroi du véhicule ferroviaire.

7. Procédé d'attache d'un câble (42) sur un côté (16) d'un chemin de câble (10) selon l'une quelconque des revendications 1 à 4, dans lequel au moins un collier de serrage (44) est placé autour du câble (42) et serré autour de la première partie (28) de la languette (26) d'un des orifices d'attache (22), le placement et le serrage du collier de serrage (44) étant entièrement effectués depuis ledit côté (16) du chemin de câbles (10).

## Patentansprüche

1. Kabelpfad (10), welcher sich gemäß einer Hauptrichtung (X-X) erstreckt, welcher Anbringungsöffnungen (22) aufweist, wobei jede Anbringungsöffnung (22) wenigstens einen Rand (24) sowie eine Zunge (26) aufweist, welche von dem Rand (24) vorsteht und einen ersten Teil (28) proximal bezüglich des Rands (24) und einen distalen zweiten Teil (30) umfasst, wobei der Kabelpfad (10) ferner längliche Öffnungen (20) aufweist, wobei der Kabelpfad (10) eine untere Fläche (12) und zwei laterale Flächen (14) umfasst, welche derart angeordnet sind, dass der Kabelpfad (10) einen U-förmigen Querschnitt in einer Ebene orthogonal zu der Hauptrichtung (X-X) aufweist, **dadurch gekennzeichnet, dass** jede aus der unteren Fläche (12) und den lateralen Flächen (14) gleichzeitig wenigstens eine der länglichen Öffnungen (20) und wenigstens eine der Anbringungsöffnungen (22) aufweist, wobei die Anbringungsöffnungen (22) und die länglichen Öffnungen (20) derart angeordnet sind, dass abwechselnde Reihen gebildet sind, wobei die Reihen der Anbringungsöffnungen (22) und die Reihen der länglichen Öffnungen (20) gemäß orthogonalen Reihen zu der Hauptrichtung (X-X) angeordnet sind.

2. Kabelpfad (10) nach Anspruch 1, wobei der zweite Teil (30) eine Breite (I₂) gemäß einer Richtung im Wesentlichen orthogonal zu der Zunge (26) aufweist, welche größer als eine Breite (I₁) des ersten Teils (28) ist.

3. Kabelpfad (10) nach Anspruch 1 oder 2, wobei sich jede Zunge (26) in der Ebene des oder der Ränder (24) der Anbringungsöffnung (22) erstreckt.

4. Anordnung (40), umfassend einen Kabelpfad (10) nach einem der vorhergehenden Ansprüche, wenigstens ein Kabel (42), welches sich an dem Kabelpfad (10) erstreckt, und wenigstens eine Klemmschelle (44), welche das Kabel (42) an dem Kabelpfad (10) befestigt, wobei die Klemmschelle (44) das Kabel (42) und den ersten Teil (28) der Zunge (26) von einer der Anbringungsöffnungen (22) umgibt, wobei der zweite Teil (30) vorzugsweise einen Anschlag für die Klemmschelle (44) bildet, welcher eine Verlagerung der Klemmschelle (44) entlang des ersten Teils (28) begrenzt.

5. Anordnung (40) nach Anspruch 4, wobei die Anordnung (40) wenigstens zwei Kabel (42) und wenigstens ein Trennelement (50) umfasst, wobei der Kabelpfad (10) längliche Öffnungen (20) aufweist, wobei das Trennelement (50) an dem Kabelpfad (10) durch wenigstens eine längliche Öffnung (20) befestigt ist, wobei das Trennelement (50) die Kabel (42) trennt.

6. Schienenfahrzeug, umfassend wenigstens eine Anordnung (40) nach einem der Ansprüche 4 und 5, wobei die Anordnung (40) an einer Wand des Schienenfahrzeugs befestigt ist.

7. Verfahren zum Anbringen eines Kabels (42) an einer Seite (16) eines Kabelpfads (10) nach einem der Ansprüche 1 bis 4, wobei wenigstens eine Klemmschelle (44) um das Kabel (42) herum platziert wird und um den ersten Teil (28) der Zunge (26) von einer der Anbringungsöffnungen (22) geklemmt wird, wobei das Platzieren und das Klemmen der Klemmschelle (44) vollständig von der Seite (16) des Kabelpfads (10) aus erfolgt.

## Claims

1. A cable tray (10) extending in a main direction (X-X), having attachment holes (22), each attachment hole (22) having at least one edge (24) as well as a tab (26) projecting from the edge (24) and comprising a first proximal part (28) relative to the edge (24) and a second distal part (30), the cable tray (10) also having oblong holes (20), the cable tray (10) comprising a bottom face (12) and two lateral faces (14), arranged so that the cable tray (10) has a U-shaped cross-section in a plane orthogonal to the main direction (X-X), **characterised in that** each of the bottom face (12) and the lateral faces (14) has both at least one of the oblong holes (20) and at least one of the attachment holes (22), the attachment holes (22) and the oblong holes (20) being arranged so as to form alternating rows, the rows of attachment holes (22) and the rows of oblong holes (20) being arranged in rows orthogonal to the main direction (X-X).

2. The cable tray (10) according to claim 1, wherein the second part (30) has a width (I₂), in a direction substantially orthogonal to the tab (26), greater than a width (I₁) of the first part (28).

3. The cable tray (10) according to claim 1 or 2, wherein each tab (26) extends in the plane of the edge(s) (24) of the attachment hole (22).

4. An assembly (40) comprising a cable tray (10) according to any one of the preceding claims, at least one cable (42) extending along the cable tray (10), and at least one clamping collar (44) fastening the cable (42) to the cable tray (10), the clamping collar (44) surrounding the cable (42) and the first part (28) of the tab (26) of one of the attachment holes (22), the second part (30) preferably forming a stop for the clamping collar (44) limiting a translation of the clamping collar (44) along the first part (28).

5. The assembly (40) according to claim 4, wherein the assembly (40) comprises at least two cables (42) and at least one separator (50), the cable tray (10) having oblong holes (20), the separator (50) being fastened to the cable tray (10) through at least one oblong hole (20), the separator (50) separating the cables (42).

6. A railway vehicle comprising at least one assembly (40) according to any one of claims 4 and 5, the assembly (40) being fastened to a wall of the railway vehicle.

7. A method for attaching a cable (42) on one side (16) of a cable tray (10) according to any one of claims 1 to 4, wherein at least one clamping collar (44) is placed around the cable (42) and clamped around the first part (28) of the tab (26) of one of the attachment holes (22), the placement and clamping of the clamp (44) being carried out entirely via said side (16) of the cable tray (10).
